# EUROPEAN PATENT SPECIFICATION

(11) **EP 3 780 635 B1**
(45) Date of publication and mention of the grant of the patent: **11.01.2023**
(21) Application number: 19776749.4
(22) Date of filing: 26.03.2019
(51) Int. Cl.: H04N 21/436, G09G 5/00, H04N 21/442, H04N 21/426, H04N 21/422

(54) **RENDERER DEVICE, RENDERER PLAYBACK SYSTEM AND INFORMATION UPDATING METHOD**
RENDERER-VORRICHTUNG, RENDERER-WIEDERGABESYSTEM UND AKTUALISIERUNGSVERFAHREN
DISPOSITIF DE MOTEUR DE RENDU, SYSTÈME DE REPRODUCTION DE MOTEUR DE RENDU ET PROCÉDÉ DE MISE À JOUR

(30) Priority: 30.03.2018 JP 2018069516
(43) Date of publication of application: 17.02.2021
(73) Proprietor: Panasonic Intellectual Property Management Co., Ltd., Osaka-shi, Osaka 540-6207 (JP)
(72) Inventor: OKAMOTO, Yuuki, Osaka-shi, Osaka 540-6207 (JP)
(74) Representative: Vigand, Philippe
(86) International application number: PCT/JP2019/012674
(87) International publication number: WO 2019/189068

(56) References cited:
- JP-A- 2011 118 470
- JP-A- 2011 223 124
- JP-A- 2012 039 549
- US-A1- 2006 253 874
- US-A1- 2009 193 469
- US-A1- 2011 282 966
- US-A1- 2013 016 858
- US-A1- 2017 060 376
- Allegro Software Development Corporation: "RDMC 101 User Manuel Version 1.20", , 1 December 2011 (2011-12-01), pages 1-96, XP055165437, Internet Retrieved from the Internet: URL:http://www.allegrosoft.com/wp-content/ uploads/2012/03/RDMC101_Manual.pdf [retrieved on 2015-01-28]
- "UPnP(TM) Device Architecture 1.1", , 15 October 2008 (2008-10-15), pages 1-136, XP055089928, Retrieved from the Internet: URL:http://upnp.org/specs/arch/UPnP-arch-D eviceArchitecture-v1.1.pdf [retrieved on 2013-11-25]
- TASAKA ET AL.: "Implementation and Evaluation of a Collaborative Content Play Method in a Home Network", 14TH INTERNATIONAL CONFERENCE ON WEAVING APPLICATIONS INTO THE NETWORK FABRIC: THE TRANSFORMATIONAL CHALLENGE, ICIN 2010, BERLIN DE, IEEE, PISCATAWAY, NJ, USA, 11 October 2010 (2010-10-11), XP001562022,

## Description

### TECHNICAL FIELD

The present disclosure relates to a renderer device, a renderer playback system, and an information updating method.

### BACKGROUND ART

Patent Literature (PTL) 1 discloses a content playback control device that identifies and controls a content playback device that plays content.

Document Allegro Software Development Corporation: "RDMC 101 User Manuel Version 1.20", 1 December 2011 (2011-12-01), pages 1-96, XP055165437,URL:http://www.allegrosoft.com/wp-content/ uploads/2012/03/RDMC101_Manual.pdf provides an overview of a DLNA home network.

Documents US 2006/253874 A1 (STARK KORINA J B [US] ET AL) 9 November 2006 (2006-11-09) and US 2017/060376 A1 (YU GAYLORD [US]) 2 March 2017 (2017-03-02)describe controlling playback devices using a portable controller.

### Citation List

### Patent Literature

PTL 1: Japanese Unexamined Patent Application Publication No. 2012-231222
PTL 2: Japanese Unexamined Patent Application Publication No. 2013-62786

### SUMMARY OF THE INVENTION

### TECHNICAL PROBLEM

The present disclosure provides a renderer device capable of reducing communication load.

### SOLUTION TO PROBLEM

The renderer device according to the present disclosure is a renderer device to be controlled by a controller device connected to a predetermined communication network. Such renderer device includes: a memory unit that stores network connection information used by the controller device to establish a connection; a detector that detects whether each of monitor devices is connected to the renderer device via the predetermined communication network; an information update unit that updates the network connection information stored in the memory unit into monitor information used to connect to one of the monitor devices, when the detector has detected that the monitor device is connected via the predetermined communication network; and a communication unit that sends the network connection information stored in the memory unit to the controller device, when receiving a request from the controller device.

Note that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

### ADVANTAGEOUS EFFECT OF INVENTION

The renderer device, the renderer playback system, and the information updating method according to the present disclosure are capable of reducing communication load.

### BRIEF DESCRIPTION OF DRAWINGS

FIG. 1 is a schematic diagram of a renderer playback system according to Embodiment 1.
FIG. 2 is a block diagram of an exemplary functional configuration of the renderer playback system according to Embodiment 1.
FIG. 3 is a sequence diagram showing an exemplary pairing operation performed between a renderer device and a monitor device according to Embodiment 1.
FIG. 4 is a sequence diagram showing an exemplary operation of selecting content to be played performed by a controller device according to Embodiment 1.
FIG. 5 is a sequence diagram showing an exemplary operation of content playback performed by the controller device according to Embodiment 1.
FIG. 6 is a flowchart of an exemplary detailed process of updating network connection information performed by the renderer device according to Embodiment 1.
FIG. 7 is a block diagram of an exemplary functional configuration of a renderer playback system according to Embodiment 2.
FIG. 8 is a sequence diagram showing an exemplary operation of content playback performed in the renderer playback system according to Embodiment 2.
FIG. 9 is a flowchart of an exemplary detailed process of updating network connection information performed by a renderer device according to Embodiment 2.
FIG. 10 is a sequence diagram showing an exemplary process of updating network connection information performed in a renderer playback system according to a variation of Embodiment 2.
FIG. 11 is a flowchart of an exemplary process of updating network connection information according to Embodiment 3.
FIG. 12 is a sequence diagram showing an exemplary operation of content playback performed in a renderer playback system according to Embodiment 4.

### DESCRIPTION OF EXEMPLARY EMBODIMENTS

### Findings that Form the Basis of the Present Invention

The inventor has found that the content playback control device described in BACKGROUND ART has problems described below.

A renderer device according to the technology as described in PTL 1 functions as a device that plays and displays content.

PTL 2 discloses a video display system that separately includes, as a device for playing content and a device for displaying content, a tuner device serving as a device that plays content to output the resulting video signal and a display device serving as a device that displays the video represented by the video signal.

When the content playback system as disclosed in PTL 1 employs, as a playback device, the device consisting from the tuner device and the display device as disclosed in PTL 2, such problems as described below occur.

In this case, a user is required to select one of the tuner device and the display device as a target device to be controlled by a controller device. In so doing, the user is required to select a desired one of the devices from items of information displayed on the controller device. It is not easy for the user to appropriately select the desired device because the user needs to distinguish between information indicating the tuner device and information indicating the display device. This causes a problem that the user's convenience is impaired.

To solve the above problem, when a pair of the tuner device and the display device is handled as a single device, and information on such device is displayed on the controller device, a playback request from the controller device is to be sent to the display device via the tuner device. In this case, the tuner device, which is not involved in content display, is required to perform communication. This causes a problem that the tuner device suffers from communication load and processing load. Similarly, a network connected to the tuner device also suffers from communication load.

To solve the above problems, the inventor has conceived the renderer device, the renderer playback system, and the information updating method according to the present disclosure.

The following describes in detail the embodiments with reference to the drawings where appropriate. Note, however, that more detailed description than is necessary may be omitted. For example, detailed description of a well-known matter or repetitive description of a substantially identical configuration may be omitted. This is to prevent the following description from becoming unnecessarily redundant and to facilitate the understanding of those skilled in the art.

Note that the inventor(s) provide the accompanying drawings and the following description for those skilled in the art to fully understand the present disclosure, and thus that these do not intend to limit the subject recited in the claims.

### EMBODIMENT 1

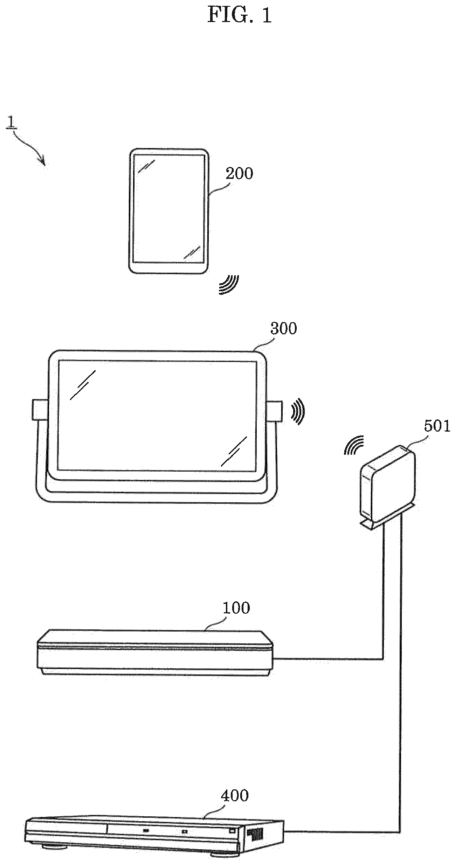

With reference to FIG. 1 through FIG. 6, the following describes Embodiment 1.

### [1-1. Configuration]

FIG. 1 is a schematic diagram of a renderer playback system according to Embodiment 1.

More specifically, FIG. 1 shows renderer device 100, controller device 200, monitor device 300, server device 400, and router 501. Of these structural components, renderer playback system 1 includes, for example, renderer device 100, controller device 200, and monitor device 300. In FIG. 1, router 501 serving as an access point connects renderer device 100, controller device 200, monitor device 300, and server device 400 to enable these devices to communicate with one another. FIG. 1 shows an unlimited example in which controller device 200 and monitor device 300 are connected wirelessly via router 501, and renderer device 100 and server device 400 are connected by wire via router 501. Each of renderer device 100, controller device 200, monitor device 300, and server device 400 may be connected via router 501 wirelessly or by wire. Renderer device 100, controller device 200, monitor device 300, and server device 400 are connected to router 501 for communication, thereby forming, for example, the same local area network (LAN). This enables renderer device 100, controller device 200, monitor device 300, and server device 400 to be mutually connected to a predetermined communication network.

Connected to a predetermined communication network, renderer device 100, controller device 200, monitor device 300, and server device 400 transmit between one another control information that utilizes protocols such as Digital Living Network Alliance (DLNA)^{®}/Universal Plug and Play (UPnP), and Hyper Text Transfer Protocol (HTTP). This, for example, enables a user to play content stored in server device 400 such as videos, still images, and music by renderer device 100 or monitor device 300 by operating controller device 200.

Renderer device 100 is a DLNA^{®} Media Renderer (DMR) compliant with DLNA^{®}/UPnP. Paired with monitor device 300, renderer device 100 outputs a video signal to monitor device 300 that has been paired with. For example, renderer device 100 exchanges network connection information (see the description below) with monitor device 300 and stores the network connection information on such partner device with which the network connection information has been exchanged, thereby performing pairing. Stated differently, pairing refers to a process performed by renderer device 100 and monitor device 300 to make a one-to-one association with each other. For example, renderer device 100 may include a signal tuner to output to monitor device 300 a video signal obtained by demodulating, by such signal tuner, a broadcast signal received by an antenna.

Controller device 200 is a DLNA^{®} Media Controller (DMC) compliant with DLNA^{®}/UPnP. Examples of controller device 200 include an information terminal such as a smartphone, a tablet terminal, and a laptop computer.

Monitor device 300 is a DLNA^{®} Media Renderer (DMR) compliant with DLNA^{®}/UPnP. Monitor device 300 displays a video signal outputted from renderer device 100 having been paired with. Monitor device 300 also plays content stored in server device 400, and displays the played video via a predetermined communication network. Examples of monitor device 300 include a portable television (TV) and a portable monitor.

Server device 400 is a DLNA^{®} Media Server (DMS) compliant with DLNA^{®}/UPnP. Server device 400 is a device with storage that stores content data. Examples of server device 400 include a Blu-ray^{®} disc (BD) recorder with storage and network attached storage (NAS).

Note that a non-illustrated server device may be connected to predetermined communication network 500 other than server device 400.

The following describes the functional configuration of renderer playback system 1.

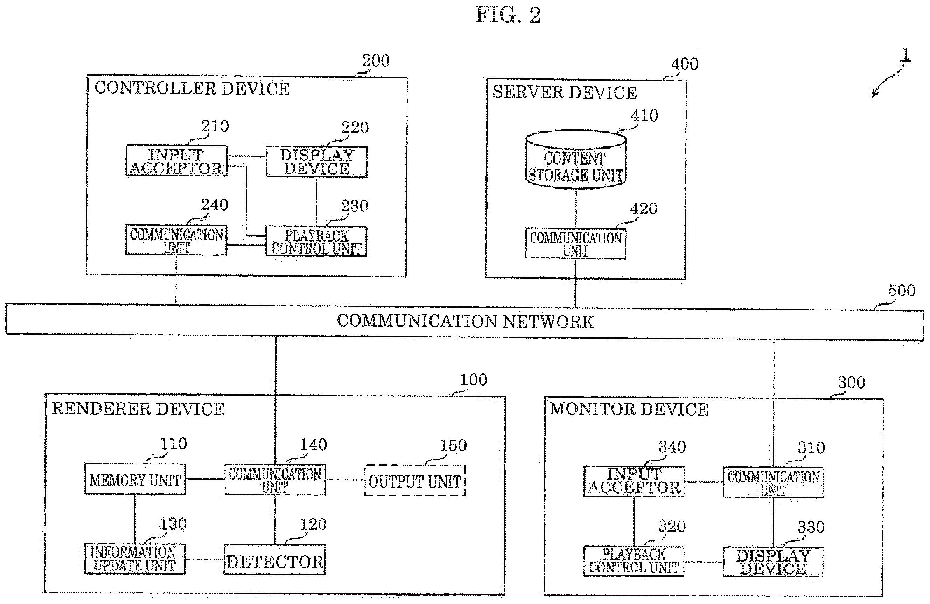

FIG. 2 is a block diagram of an exemplary functional configuration of the renderer playback system according to Embodiment 1.

Renderer playback system 1 includes renderer device 100, controller device 200, monitor device 300, and server device 400. Each of renderer device 100, controller device 200, monitor device 300, and server device 400 is connected to communication network 500. This enables renderer device 100, controller device 200, monitor device 300, and server device 400 to be connected with one another for communication.

Renderer device 100 includes memory unit 110, detector 120, information update unit 130, and communication unit 140 as its functional units. Renderer device 100 may further include output unit 150.

Memory unit 110 stores network connection information used by controller device 200 to establish a connection. The network connection information is simply required to indicate a connection destination of controller device 200. The network connection information is, for example, a Device Description Document (DDD) defined in UPnP. DDD is information including a device name, a destination URL (Uniform Resource Locator), a UDN (Unique Device Name) and so forth. The device name is, for example, ModelName and FirendlyName defined in the DDD. The UDN is an identifier that uniquely identifies the device. The network connection information may also include renderer capability information indicating the renderer capability of renderer device 100. Memory unit 110 may store the UDN and the destination URL of renderer device 100 by default. Memory unit 110 is implemented, for example as a nonvolatile memory.

Detector 120 detects whether monitor device 300 is connected to renderer device 100 via communication network 500. More specifically, detector 120 may detect that monitor device 300 is connected to renderer device 100 by performing with monitor device 300 communication that follows a predetermined procedure. Detector 120 may also detect that monitor device 300 is connected to renderer device 100 when obtaining the DDD of the device connected to communication network 500 that includes information indicating that such device is a monitor device paired with renderer device 100.

In the communication that follows the predetermined procedure, detector 120 receives, as the network connection information, information on monitor device 300 from monitor device 300 that includes the model name, the manufacturer name, the model number, the model description, the UDN (an ID that uniquely identifies the device), the destination URL including the IP address, and so forth. Note that the network connection information detector 120 receives is simply required to include the UDN or the destination URL, and thus may not include other information on monitor device 300 such as the model name, the manufacturer name, the model number, and the model description. In this case, monitor device 300 sends a specified HTTPPOST request to renderer device 100, which then responds to such HTTPPOST. Through this, monitor device 300 and renderer device 100 exchange information used to establish a connection for mutual communication. Through this process, detector 120 of renderer device 100 obtains the network connection information used to connect to monitor device 300. Note that the network connection information on monitor device 300 is information that includes, for example, the device name of monitor device 300, the destination URL indicating monitor device 300 as the connection destination, the UDN of monitor device 300 and so forth, as in the case of the network connection information on renderer device 100.

When detector 120 has detected that monitor device 300 is connected to communication network 500, information update unit 130 updates the network connection information stored in memory unit 110 into network connection information (monitor information) used to connect to monitor device 300. Stated differently, information update unit 130 updates the control URL into the control URL of monitor device 300 obtained by detector 120 or the UDN into the UDN of monitor device 300. The control URL includes, for example, the IP address of monitor device 300. Note that information update unit 130 may change the identifier of the information stored as the network connection information in memory unit 110 into the identifier indicating the network connection information, thereby updating the network connection information. Stated differently, in addition to updating the network connection information stored in memory unit 110 by overwriting with new device information, information update unit 130 may update the network connection information by updating the identifier of one of the items of device information stored in memory unit 110 into information indicating the network connection information.

In response to receipt of a request from controller device 200, communication unit 140 sends to controller device 200 the network connection information stored in memory unit 110. Stated differently, to send the network connection information stored in memory unit 110 in response to receipt of a request (i.e., an obtainment request for network connection information) from controller device 200, communication unit 140 sends the network connection information on renderer device 100 when information update has not yet been performed by information update unit 130, and sends the network connection information on monitor device 300 when information update has already been performed.

As the request from controller device 200, communication unit 140 receives, for example, a DDD request compliant with UPnP that is an obtainment request for network connection information. In response to the DDD request, communication unit 140 sends to controller device 200 the control URL or the UDN stored in memory unit 110. In so doing, as a response to the DDD request, communication unit 140 sends to controller device 200 information on renderer device 100 that includes the model name, the manufacturer name, the model number, the model description, the UDN (an ID that uniquely identifies the device), the destination URL including the IP address, and so forth.

Communication unit 140 determines, as network connection information to send to controller device 200, one of the network connection information on monitor device 300 and the network connection information on the renderer device, depending on the detection result by detector 120 and the state of output unit 150, and sends the determined network connection information to controller device 200. More specifically, communication unit 140 sends the network connection information on monitor device 300 to controller device 200, when the detection result indicates that monitor device 300 is connected to renderer device 100 and no device is connected to output unit 150. Meanwhile, communication unit 140 sends the network connection information on renderer device 100 to controller device 200, when the detection result indicates that monitor device 300 is not connected to renderer device 100 and a predetermined device is connected to output unit 150. Communication unit 140 may send to controller device 200 the network connection information on a device that is preliminarily set by the user, when the detection result indicates that monitor device 300 is connected to renderer device 100 and a predetermined device is connected to output unit 150. In this case, communication unit 140 may send to controller device 200 the network connection information on monitor device 300 and the network connection information on renderer device 100 to prompt the user to select one of monitor device 300 and renderer device 100 to be controlled by controller device 200. Communication unit 140 may send information indicating that the suggested device is not connected, when the detection result indicates that monitor device 300 is not connected to renderer device 100 and no device is connected to output unit 150.

Output unit 150 outputs at least one of a video signal or an audio signal to the predetermined device by communication that is different from the communication that uses communication network 500. Output unit 150 is, for example, an output terminal compliant with High-Definition Multimedia Interface (HDMI)^{®} and so forth. In this case, the state of output unit 150 refers to a state, for example, of whether the predetermined device is connected to the HDMI^{®} output terminal. When renderer device 100 includes a display device, output unit 150 may be configured to output a video signal or an audio signal to the display device. In this case, the state of output unit 150 refers to a state of whether displaying of the video represented by the video signal onto the display device is preliminarily permitted.

Controller device 200 includes input acceptor 210, display device 220, playback control unit 230, and communication unit 240.

Input acceptor 210 accepts an input from the user. Input acceptor 210 is, for example, a touch panel that accepts an input to a user interface (UI) displayed on display device 220. Note that the following description refers to input also as operation.

Display device 220 displays a UI. Display device 220 is, for example, a liquid crystal display and an organic electro-luminescence (EL) display.

In accordance with an input from the user accepted by input acceptor 210, playback control unit 230 sends, via communication unit 240, a control signal for controlling content playback to a device to be controlled, i.e., renderer device 100 or monitor device 300.

Communication unit 240 obtains the network connection information from renderer device 100. Communication unit 240 sends the control signal from playback control unit 230 to the device to be controlled indicated by the obtained network connection information.

Monitor device 300 includes communication unit 310, playback control unit 320, display device 330, and input acceptor 340.

Communication unit 310 obtains the network connection information on renderer device 100 by performing with renderer device 100 communication that follows the predetermined procedure. Communication unit 310 also receives content data from server device 400 according to the control signal, received from controller device 200, indicating a playback request. More specifically, communication unit 310 receives from controller device 200 the control signal indicating a playback request, and sends to server device 400 a transfer request for the content indicated by the playback request represented by such received control signal. Through this, communication unit 310 receives the content data from server device 400.

Playback control unit 320 plays the content data received by communication unit 310 from server device 400, and outputs to display device 330 the video signal obtained by such playback.

Display device 330 displays the video represented by the video signal outputted by playback control unit 320. Display device 330 is, for example, a liquid crystal display and an organic EL display.

Input acceptor 340 accepts an input from the user. Input acceptor 340 accepts, for example, an input from the user that serves as a trigger to start pairing with renderer device 100. Through this, communication unit 310 starts communication with renderer device 100 that follows the predetermined procedure.

Server device 400 includes content storage unit 410 and communication unit 420.

Content storage unit 410 is storage that stores content data such as videos, still images, and music.

Communication unit 420 obtains from content storage unit 410 the content data that corresponds to a request received from monitor device 300, and sends the obtained content data to monitor device 300.

### [1-2. Operation]

The following describes an operation performed in renderer playback system 1 according to Embodiment 1 with the above configuration.

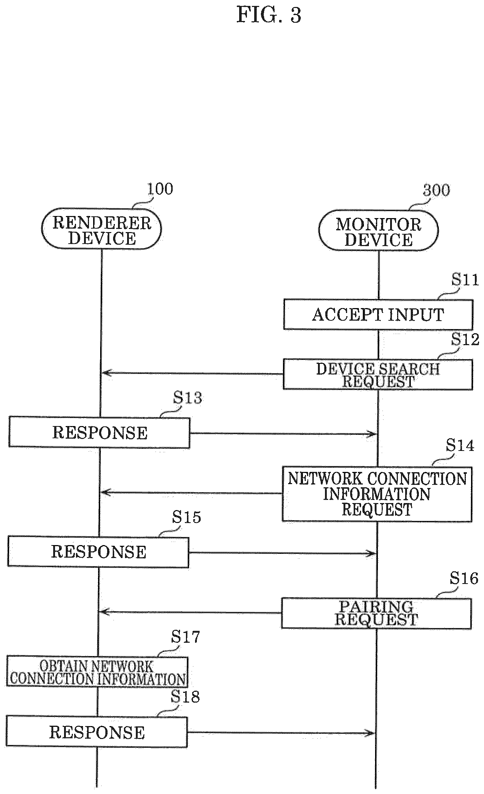

First, with reference to FIG. 3, a pairing operation will be described, which is an exemplary communication that follows the predetermined procedure performed between renderer device 100 and monitor device 300.

FIG. 3 is a sequence diagram showing an exemplary pairing operation performed between the renderer device and the monitor device according to Embodiment 1.

First, input acceptor 340 of monitor device 300 accepts an input from the user indicating that pairing should start (S11).

Next, communication unit 310 of monitor device 300 sends to renderer device 100 a device search request, e.g., an M-SEARCH request targeting at a server or a renderer (S12). Although not illustrated in FIG. 3, communication unit 310 sends a device search request to devices other than renderer device 100, i.e., controller device 200 and server device 400.

When communication unit 140 of renderer device 100 has received the device search request, detector 120 sends via communication unit 140 a response indicating that the request has been received to monitor device 300 (S13).

When receiving the response, communication unit 310 of monitor device 300 sends to renderer device 100 an obtainment request for network connection information, e.g., an HTTPGET request for the DDD (S14).

When communication unit 140 of renderer device 100 has received the obtainment request for network connection information, detector 120 sends to monitor device 300 the network connection information via communication unit 140, i.e., a response that includes the network connection information used to connect to renderer device 100 (S15). Non-illustrated memory unit of monitor device 300 stores the network connection information included in the received response.

Communication unit 310 of monitor device 300 sends to renderer device 100 a pairing request, e.g., an HTTPPOST request that includes the network connection information on monitor device 300 (S16). Note that the pairing request is a request for performing the pairing process described above.

Communication unit 140 of renderer device 100 obtains the network connection information on monitor device 300 included in the pairing request (S17). The obtained network connection information on monitor device 300 is stored into memory unit 110.

Subsequently, communication unit 140 sends a response to monitor device 300 (S18).

As described above, renderer device 100 and monitor device 300 perform pairing to exchange each other's network connection information. Renderer device 100 and monitor device 300 then store the each other's network connection information obtained by exchange.

The following describes an operation performed by controller device 200 of selecting content to be played.

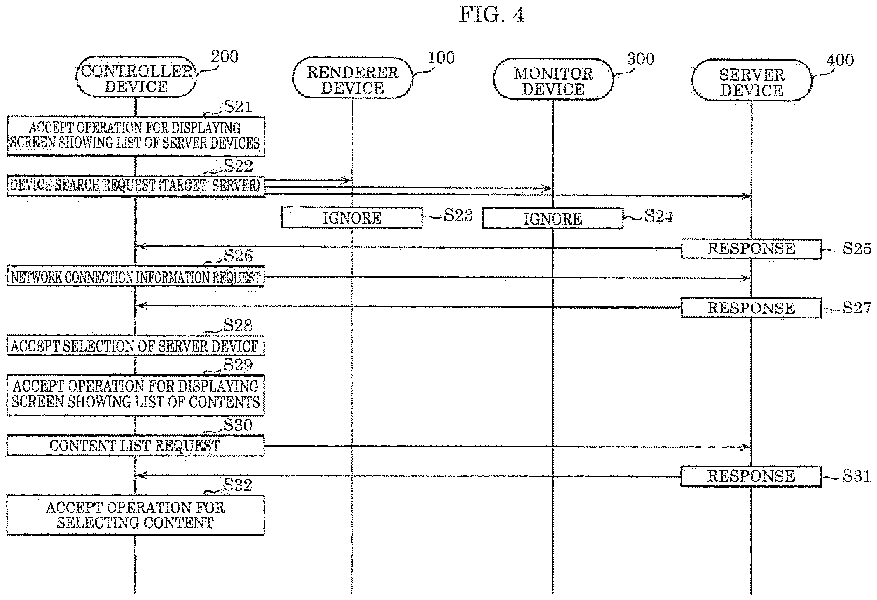

FIG. 4 is a sequence diagram showing an exemplary operation of selecting content to be played performed by the controller device according to Embodiment 1.

First, input acceptor 210 of controller device 200 accepts an operation of displaying a screen showing a list of servers (S21).

In response to this, communication unit 240 sends a device search request, e.g., an M-SEARCH request targeting at a server, to other devices, i.e., renderer device 100, monitor device 300, and server device 400 (S22).

Renderer device 100 and monitor device 300, which are not applicable to the device search request targeting at a server, ignore the request (S23 and S24).

Meanwhile, communication unit 420 of server device 400, which is applicable to the device search request targeting at a server, sends a response to the request to controller device 200 (S25).

When receiving the response from server device 400, communication unit 240 of controller device 200 sends to such server device 400 an obtainment request for network connection information, e.g., an HTTPGET request (S26).

Communication unit 420 of server device 400 sends to controller device 200 a response that includes the network connection information on server device 400 (S27).

When communication unit 240 of controller device 200 has received the response that includes the network connection information from server device 400, display device 220 displays an UI that is information indicating server device 400 indicated by the received network connection information and that is used for accepting a selection from the user. Input acceptor 210 of controller device 200 then accepts the selection of a server device from the user (S28). Note that the following description assumes that server device 400 has been selected from a plurality of server devices including server device 400.

Subsequently, when input acceptor 210 has accepted an operation of displaying a screen showing a list of contents (S29), communication unit 240 sends a content list request to server device 400 (S30).

In response to receipt of the content list request, communication unit 420 of server device 400 sends to controller device 200 a response that includes the content list showing a plurality of contents stored in content storage unit 410 (S31).

When communication unit 240 of controller device 200 has received the response that includes the content list from server device 400, display device 220 displays an UI that is information indicating a plurality of contents shown in the received content list and that is used for accepting a selection from the user. Input acceptor 210 of controller device 200 then accepts from the user an operation of selecting one or more contents of a plurality of contents (S32).

In the operation of content selection, as described above, the user selects server device 400 that provides content, and content included in such server device 400.

The following describes an operation of content playback performed by controller device 200.

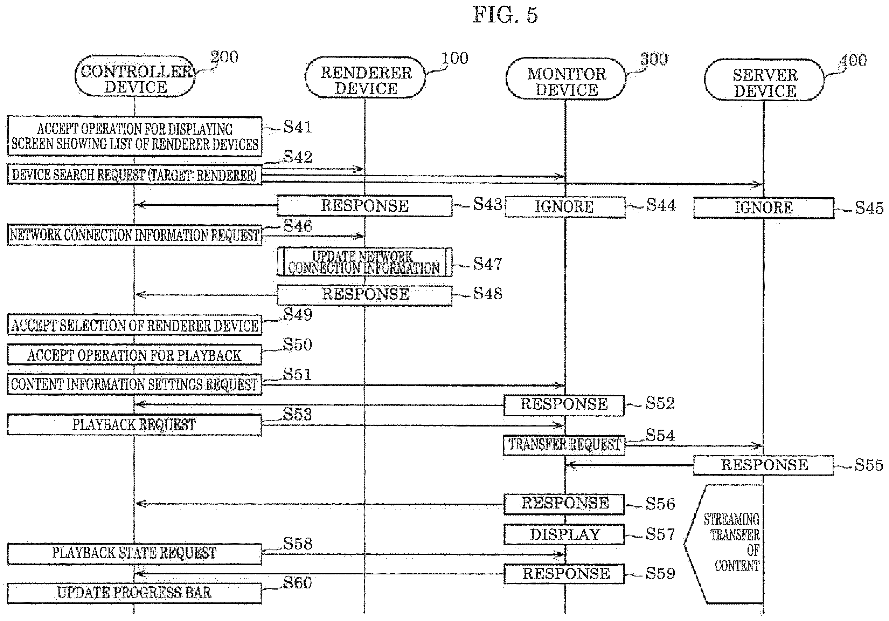

FIG. 5 is a sequence diagram showing an exemplary operation of content playback performed in the renderer playback system according to Embodiment 1.

Input acceptor 210 of controller device 200 accepts an operation of displaying the screen showing a list of renderer devices (S41).

In response to this, communication unit 240 sends a device search request, e.g., an M-SEARCH request targeting at a renderer, to other devices, i.e., renderer device 100, monitor device 300, and server device 400 (S42).

Communication unit 140 of renderer device 100, which is applicable to the device search request targeting at a renderer, sends a response to the request to controller device 200 (S43).

Meanwhile, monitor device 300 ignores the request despite that monitor device 300 is a renderer applicable to the device search request targeting at monitor device 300 (S44). Stated differently, monitor device 300 will be unresponsive to the search request, received from controller device 200, that specifies a renderer.

Server device 400, which is not applicable to the device search request targeting at a renderer, ignores the request (S45).

When receiving the response from renderer device 100, communication unit 240 of controller device 200 sends to renderer device 100 an obtainment request for network connection information, e.g., an HTTPGET request (S46). Stated differently, communication unit 240 sends an obtainment request for network connection information to the device that has sent the response.

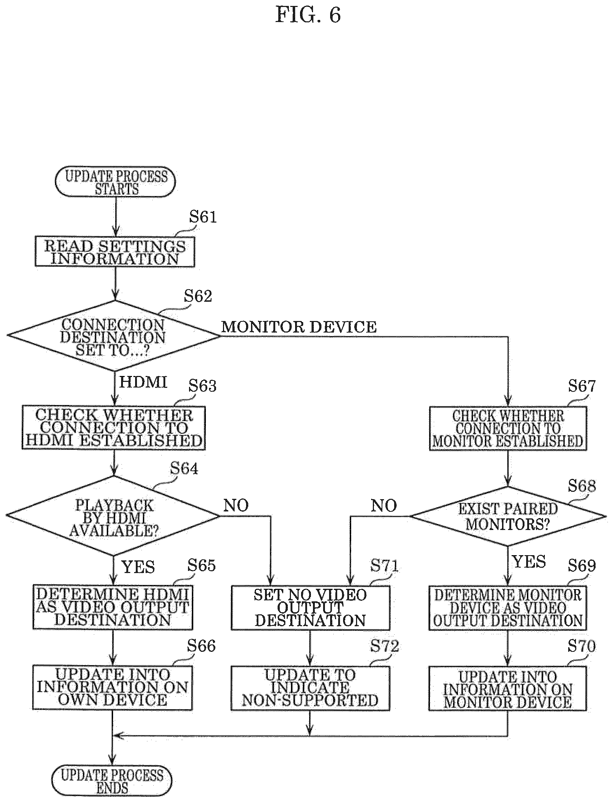

In response to receipt of the obtainment request for network connection information, communication unit 140 of renderer device 100 performs a process of updating network connection information (S47). The details of the network connection information update process will be described later with reference to FIG. 6. Note that the following description assumes that memory unit 110 stores the network connection information on monitor device 300 as the network connection information.

Subsequently, communication unit 140 sends to controller device 200 a response that includes the network connection information stored in memory unit 110 (S48).

When communication unit 240 of controller device 200 has received the response that includes the network connection information from renderer device 100, display device 220 displays an UI that is information indicating monitor device 300 indicated by the received network connection information and that is used for accepting a selection from the user. Input acceptor 210 of controller device 200 then accepts the selection of a renderer device from the user (S49). Note that the following description assumes that monitor device 300 is selected as a renderer device.

Subsequently, when input acceptor 210 has accepted a playback operation (S50), communication unit 240 sends to monitor device 300 indicated by the network connection information a content information settings request for the content selected in the sequence diagram in FIG. 4 (S51). An example of the settings request is an AVT:SetAVTrasportURI() request defined in UPnP. Note that the settings request includes information such as a destination URL through which the content is to be played.

In response to receipt of the settings request for setting the content information, communication unit 310 of monitor device 300 sends a response to controller device 200 (S52).

When receiving the response, communication unit 240 of controller device 200 sends to monitor device 300 a playback request indicated by the playback operation accepted by input acceptor 210 (S53). An example of the playback request is an AVT:Play() request defined in UPnP. Controller device 200 sends the playback request to monitor device 300, thereby causing monitor device 300 to receive the selected content from server device 400 and play the received content.

In response to receipt of the playback request, communication unit 310 of monitor device 300 sends to server device 400 a transfer request for transferring the selected content, e.g., an HTTPGET request (S54).

In response to receipt of the transfer request, communication unit 420 of server device 400 sends a response to monitor device 300 (S55), and starts the streaming transfer of the content requested by the transfer request.

In response to receipt of the playback request from controller device 200, communication unit 310 of monitor device 300 sends to controller device 200 a response to such playback request (S56), and display device 330 displays the content represented by the content data streamed from server device 400 (S57). Note that step S56 is simply required to be performed after the receipt of the playback request in step S53, and thus not required to be performed subsequent to step S55.

Meanwhile, when receiving the response to the playback request from monitor device 300, communication unit 240 of controller device 200 sends to monitor device 300 a playback state request for obtaining a playback state, e.g., an AVT:GetPositionInfo() request defined in UPnP (S58).

In response to receipt of the playback state request, communication unit 310 of monitor device 300 obtains the playback state from playback control unit 320, and sends to controller device 200 a response that includes the obtained playback state (S59).

When receiving the response that includes the playback state, controller device 200 updates the progress bar being displayed that indicates the point in the content currently played, in accordance with the playback state included in the received response (S60).

In the operation of content playback, as described above, controller device 200 and monitor device 300 transmit therebetween control signals concerning playback, thereby causing monitor device 300 to play the content.

FIG. 6 is a flowchart of an exemplary detailed process of updating network connection information performed by the renderer device according to Embodiment 1.

Subsequent to step S47 in FIG. 5, communication unit 140 of renderer device 100 reads the settings information from memory unit 110 (S61). The settings information here refers to the settings of a connection destination, previously selected by the user, indicating the destination to which the video is to be outputted.

Communication unit 140 determines whether the connection destination in the settings information is set to an HDMI^{®} or a monitor device (S62).

When determining that the connection destination in the settings information is set to an HDMI^{®} (HDMI^{®} in S62), communication unit 140 checks whether output unit 150 is connected, i.e., whether a connection by the HDMI^{®} has been established (S63).

When determining that playback by an HDMI^{®} is available (Yes in S64), communication unit 140 determines an HDMI^{®} as the output destination of the video (S65).

Subsequently, information update unit 130 updates the network connection information stored in memory unit 110 into the network connection information on the own device, i.e., renderer device 100 (S66). In this case, the video signal is outputted to a predetermined device connected to output unit 150.

The process returns to step S62. When determining that the connection destination in the settings information is set to a monitor device (monitor device in S62), communication unit 140 checks whether a connection to monitor device 300 has been established (S67).

When determining that monitor device 300 that has undergone pairing is present (Yes in S68), communication unit 140 determines monitor device 300 as the output destination of the video (S69).

Subsequently, information update unit 130 updates the network connection information stored in memory unit 110 into the network connection information on monitor device 300 (S70). In this case, the video signal is to be outputted to monitor device 300.

When communication unit 140 determines in step S64 that playback by an HDMI^{®} is unavailable (No in S64), or determines in step S68 that no monitor device that has undergone pairing is present (No in S68), no output destination is determined to be set (S71), and information indicating that DMR is supported is concealed or the information is updated into one indicating that DMR is not supported (S72).

Note that in the case of No in step S64, the process may proceed to step S67 without proceeding to step S71. Meanwhile, in the case of No in step S68, the process may proceed to step S63 without proceeding to step S71. Stated differently, the information update process has been described as a process that performs one of step S64 and step S68, but the present disclosure is not limited to this, and thus determinations of both step S64 and step S68 may be made in the process.

### [1-3. Effects, etc.]

As described above, in the present embodiment, renderer device 100, which is to be controlled by controller device 200 connected to communication network 500, includes memory unit 110, detector 120, information update unit 130, and communication unit 140. Memory unit 110 stores network connection information used by controller device 200 to establish a connection. Detector 120 detects whether monitor device 300 is connected to renderer device 100 via communication network 500. When detector 120 has detected that monitor device 300 is connected to communication network 500, information update unit 130 updates the network connection information stored in memory unit 110 into network connection information for monitor used to connect to monitor device 300. When receiving a request from controller device 200, communication unit 140 sends the network connection information stored in memory unit 110 to controller device 200.

According to this aspect, renderer device 100 sends to controller device 200 the network connection information used to connect to monitor device 300 as a device to be controlled by controller device 200. This configuration enables controller device 200 to connect directly to monitor device 300 for communication, and control monitor device 300, without needing to communicate with renderer device 100. This thus reduces communication load on communication network 500.

Since renderer device 100 sends the network connection information stored in memory unit 110 to controller device 200, it is possible, for example, to prevent monitor device 300 from sending directly to controller device 200 the network connection information on monitor device 300. This configuration enables the user to easily select a device to be controlled, using controller device 200, on the basis of the network connection information from renderer device 100.

In the present embodiment, detector 120 performs communication that follows a specified procedure with monitor device 300 to detect that such monitor device 300 has been connected to renderer device 100. This enables an easy detection of monitor device 300 connected to renderer device 100.

The present embodiment further includes output unit 150. Output unit 150 outputs at least one of a video signal or an audio signal to a predetermined device by communication that is different from communication that uses communication network 500. Communication unit 140 determines, as network connection information to send to controller device 200, one of the network connection information on monitor device 300 and the network connection information on renderer device 100, based on a detection result obtained by detector 120 and a state of output unit 150, and sends the network connection information determined to controller device 200. This enables the user to determine, for example, a device connected to renderer device 100, as a device to be controlled by controller device 200.

In renderer playback system 1 according to the present embodiment, monitor device 300 is connected to communication network 500 and is unresponsive to a search request that specifies a renderer, when receiving the search request from controller device 200. This enables controller device 200 to present renderer device 100 out of renderer device 100 and monitor device 300. This thus enables the user to easily select a desired device.

### EMBODIMENT 2

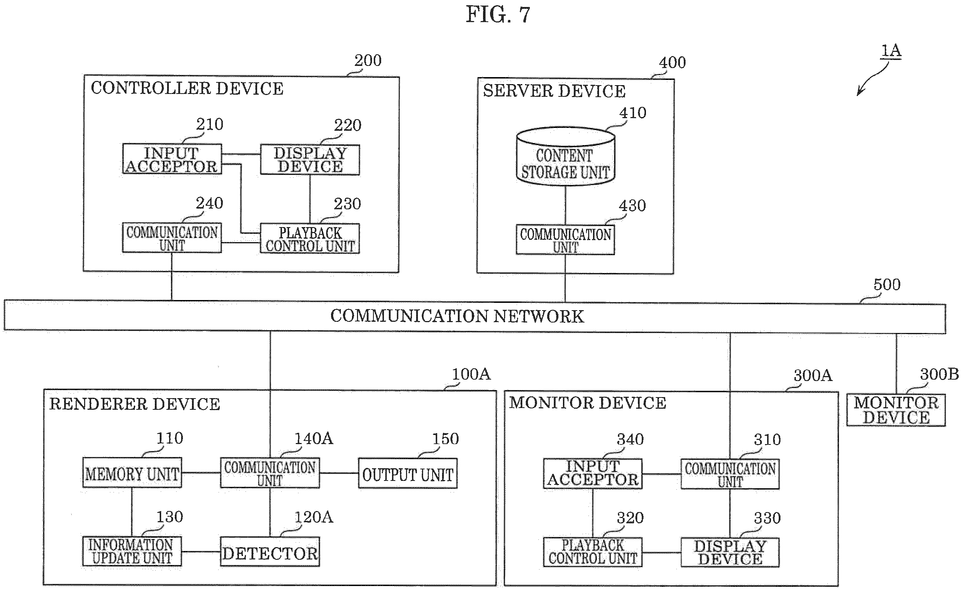

With reference to FIG. 7 through FIG. 10, the following describes Embodiment 2.

### [2-1. Configuration]

FIG. 7 is a block diagram of an exemplary functional configuration of a renderer playback system according to Embodiment 2.

Renderer playback system 1A according to Embodiment 2 is different from renderer playback system 1 according to Embodiment 1 in that renderer playback system 1A includes monitor devices 300A and 300B and in the functions of detector 120A and communication unit 140A of renderer device 100A. The other configuration of renderer playback system 1A according to Embodiment 2 is similar to that of renderer playback system 1 according to Embodiment 1, and thus detailed description thereof will be omitted.

The configuration of each of monitor devices 300A and 300B is similar to that of monitor device 300 according to Embodiment 1, and thus the description thereof will be omitted.

Detector 120A detects whether monitor devices that have been connected through communication that follows a specified procedure are in a playback available state. More specifically, detector 120A may detect the power states of monitor devices 300A and 300B that have been detected as being connected to renderer device 100, thereby detecting whether these monitor devices are in the playback available state. For example, detector 120A may detect whether each of the detected monitor devices 300A and 300B is powered on. Stated differently, detector 120A determines that monitor devices 300A and 300B are in the playback available state when these monitor devices are in the power-on state.

Alternatively, detector 120A may detect that each of monitor devices 300A and 300B is under a preferential operation, such as in the case where the user is conducting an operation of changing the network settings of such monitor device. Through such detection, detector 120A may determine that a monitor device that has been detected as being under a preferential operation as in the playback unavailable state.

To detect whether each of monitor devices 300A and 300B is in the playback available state, detector 120A may send an M-SEARCH request that specifies the UDN corresponding to each of monitor devices 300A and 300B, and obtain a response from a monitor device corresponding to the specified UDN on communication network 500, thereby determining whether such monitor device is connected. In so doing, detector 120A may detect whether each of the monitor devices is in the playback available state on the basis of information, included in the response from the monitor device, indicating whether such monitor device is in the playback available state.

When receiving from controller device 200 an obtainment request for network connection information, communication unit 140A sends to controller device 200 the network connection information on one of monitor devices 300A and 300B, the power state of which detected by detector 120A is the power-on state. Note that when both of monitor devices 300A and 300B, i.e., a plurality of monitor devices 300A and 300B, are in the power-on state, communication unit 140A sends to controller device 200 the network connection information on one monitor device which is in a higher priority that is preliminarily determined. Also note that communication unit 140A will not send to controller device 200 the network connection information on a monitor device, the power state of which is the power-off state.

The present description assumes that renderer device 100A has performed pairing, described in FIG. 3 according to Embodiment 1, with each of monitor devices 300A and 300B, and thus that its memory unit 110 stores the network connection information on each of monitor devices 300A and 300B. Memory unit 110 stores, for example, the device name and the destination URL of each of monitor devices 300A and 300B as the network connection information.

### [2-2. Operation]

The following describes the operation performed in renderer playback system 1A according to Embodiment 2 with the above configuration.

First, a content playback operation performed by controller device 200 will be described.

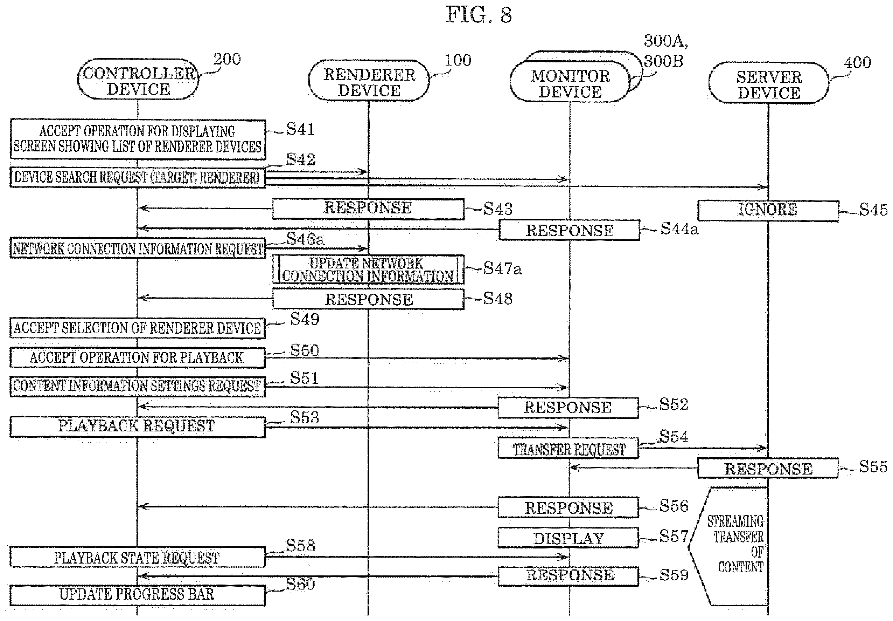

FIG. 8 is a sequence diagram showing an exemplary operation of content playback performed in the renderer playback system according to Embodiment 2.

The content playback operation according to Embodiment 2 is different from the content playback operation according to Embodiment 1 in steps S44a, S46a, and S47a, and thus these different steps S44a, S46a, and S47a will be mainly described. The other steps S41 through S43, S45, and S48 through S60 are similar to those of the content playback operation according to Embodiment 1 described with reference to FIG. 5, and thus detailed description thereof will be omitted.

Subsequent to step S42, communication unit 140A of renderer device 100 sends to controller device 200 a response to the device search request targeting at a renderer, to which such renderer device is applicable (S43).

Similarly, monitor devices 300A and 300B are also renderers applicable to the device search request targeting at monitor devices 300A and 300B, and thus communication unit 310 of each of monitor devices 300A and 300B sends a response to the request to controller device 200 (S44a).

Meanwhile, server device 400, which is not applicable to the device search request targeting at a renderer, ignores the request (S45).

Communication unit 240 of controller device 200 receives a response from each of renderer device 100, and monitor devices 300A and 300B, but sends to renderer device 100 an obtainment request for network connection information, e.g., an HTTPGET request, among renderer device 100, and monitor devices 300A and 300B (46a).

Stated differently, controller device 200 sends in step S42 the search request that specifies a renderer, thereby determining a device that is based on the network connection information received from renderer device 100 as a device to be controlled, from among the items of network connection information received from renderer device 100, and monitor devices 300A and 300B, and sending a request for network connection information to renderer device 100 in step S46a.

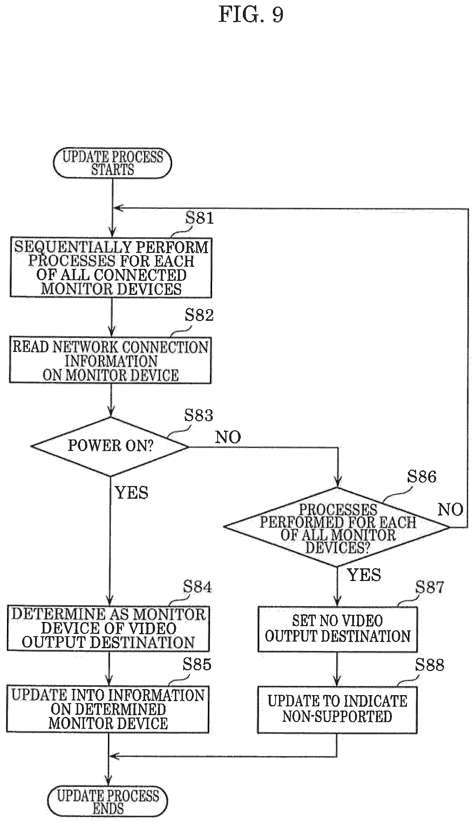

In response to receipt of the obtainment request for the network connection information, communication unit 140A of renderer device 100 performs the process of updating the network connection information (S47a). The details of the process of updating network connection information will be described later with reference to FIG. 9.

FIG. 9 is a flowchart of an exemplary detailed process of updating network connection information performed by the renderer device according to Embodiment 2.

Subsequent to step S47a in FIG. 8, detector 120A of renderer device 100A sequentially performs the processes of the subsequent step S82 through step S88 for each of all the connected monitor devices 300A and 300B one by one (S81).

Detector 120A reads the network connection information on a monitor device that is currently processed (S82), and determines whether such monitor device is powered on (S83).

When detector 120A determines that such monitor device is powered on (Yes in S83), information update unit 130 determines such monitor device as the output destination to which the video is to be outputted (S84).

Subsequently, information update unit 130 updates the network connection information stored in memory unit 110 into the network connection information on such determined monitor device (S85).

The process returns to step S83. When determining that the monitor device is powered off (No in S83), detector 120A determines whether the processes of step S82 and the subsequent steps have already been performed for all of the monitor devices (S86).

When the processes of step S82 and the subsequent steps have already been performed for all of the monitor devices (Yes in S86), information update unit 130 determines that no output destination is to be set (S87), and conceals information indicating that DMR is supported or updates the information into one indicating that DMR is not supported (S88).

Meanwhile, when the processes of step S82 and the subsequent steps have not yet been performed for all of the monitor devices (No in S86), information update unit 130 repeats the processes of step S82 and the subsequent steps for the next monitor device.

### [2-3. Effect, etc.]

As described above, in the present embodiment, detector 120A detects a power state of monitor devices 300A and 300B detected as being connected to renderer device 100A. When receiving the request from controller device 200, communication unit 140A sends to controller device 200 the network connection information on one of the monitor devices, the power state of which detected by detector 120A is a power-on state, out of items of the network connection information on monitor devices300A and 300B.

This configuration enables the user to easily select, as a device to be controlled by controller device 200, a monitor device that is powered on, from a plurality of monitor devices 300A and 300B. Stated differently, the user is simply required to power on the monitor device the user wishes to use for an easy selection of a desired monitor device.

Also in the present embodiment, controller device 200 sends a search request specifying a renderer to determine a device to be controlled based on the network connection information received from renderer device 100A, out of the network connection information received from renderer device 100A and the network connection information received from monitor devices 300A and 300B. Stated differently, controller device 200 determines a device to be controlled, on the basis of the network connection information received from renderer device 100A, even when receiving responses from renderer device 100A, and monitor devices 300A and 300B. This configuration enables the user to easily select a device to be controlled.

### [2-4. Variation]

Network connection information according to Embodiment 2 described above may be updated iteratively at some interval.

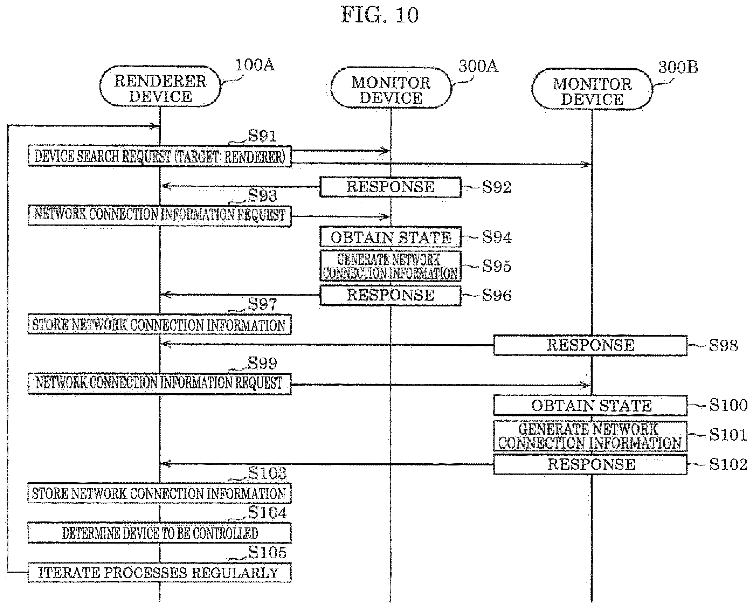

With reference to FIG. 10, the following describes a variation.

FIG. 10 is a sequence diagram showing an exemplary process of updating network connection information performed in a renderer playback system according to a variation of Embodiment 2. Note that FIG. 10 omits the illustration of controller device 200 and server device 400, which do not perform any processes.

First, communication unit 140A of renderer device 100A sends a device search request, e.g., an M-SEARCH request targeting at a renderer, to other devices, i.e., controller device 200, monitor devices 300A and 300B, and server device 400 (S91).

Communication unit 310 of monitor device 300A, which is applicable to the device search request targeting at a renderer, sends a response to the request to renderer device 100A (S92).

When receiving the response from monitor device 300A, communication unit 140A of renderer device 100A sends to such monitor device 300A an obtainment request for network connection information, e.g., an HTTPGET request (S93).

Monitor device 300A obtains the state of monitor device 300A, i.e., the state of whether monitor device 300A is in the playback available state (S94), and generates network connection information that includes the obtained state (S95). Stated differently, monitor device 300A generates, as network connection information, information that includes the playback available state, the device name, the destination URL and so forth.

Communication unit 310 of monitor device 300A sends to renderer device 100A a response that includes the generated network connection information (S96).

When communication unit 140A has received the response from monitor device 300A, information update unit 130 of renderer device 100A causes memory unit 110 to store the network connection information included in the received response (S97).

Processes of the subsequent step S98 through step S103 performed for monitor device 300B are similar to those of steps S93 through S97 performed for monitor device 300A, respectively, and thus detailed description thereof will be omitted.

Subsequently, information update unit 130 of renderer device 100A determines, as a device to be controlled by controller device 200, a monitor device, the playback available state of which, included in the network connection information stored in memory unit 110, indicates that such monitor device is available for playback (S104). Note that when a plurality of monitor devices are available for playback, information update unit 130 may determine, as a device to be controlled, a monitor device which ranks higher in a preliminarily determined priority.

After a predetermined time interval from step S104, the process returns to step S91 to repeat the processes of steps S91 through S104 (S105).

### EMBODIMENT 3

The following describes Embodiment 3.

Embodiment 3 may perform a different process of updating network connection information from the process of updating network connection information described in Embodiment 1 with reference to FIG. 6.

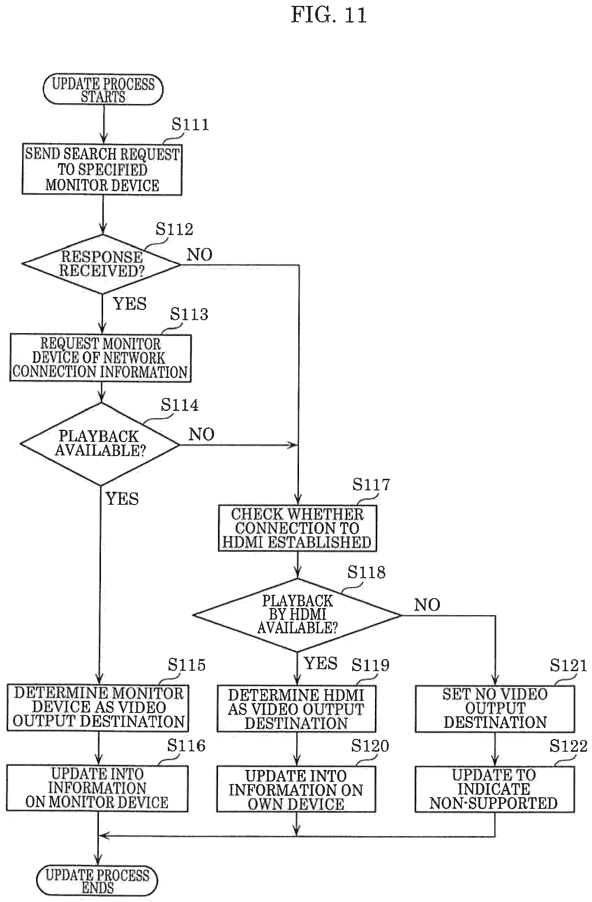

FIG. 11 is a flowchart of an exemplary process of updating network connection information according to Embodiment 3.

First, communication unit 140 of renderer device 100 sends, to specified monitor device 300 already paired with, a device search request, e.g., an M-SEARCH request that specifies the UDN of specified monitor device 300 as a search target (S111).

Communication unit 140 determines whether a response has been received from monitor device 300 (S112).

When the response has been received from monitor device 300 (Yes in S112), communication unit 140 requests monitor device 300 for the transmission of the network connection information (S113).

Communication unit 140 receives from monitor device 300 the network connection information that includes the playback available state, and determines whether monitor device 300 is available for playback on the basis of the playback availability information (S114).

When communication unit 140 determines that monitor device 300 is available for playback (Yes in S114), information update unit 130 determines such monitor device 300 as the output destination of the video (S115), and updates the network connection information stored in memory unit 110 into the network connection information on such monitor device 300 (S116).

When no response has been received from monitor device 300 (No in S112), or when monitor device 300 is unavailable for playback (No in S114), communication unit 140 checks whether monitor device 300 is connected (S117).

When determining that playback by an HDMI^{®} is available (Yes in S118), communication unit 140 determines an HDMI^{®} as the output destination of the video (S119).

Subsequently, information update unit 130 updates the network connection information stored in memory unit 110 into the network connection information on the own device, i.e., renderer device 100 (S120). In this case, the video signal is outputted to a predetermined device connected to output unit 150.

When communication unit 140 determines that playback by an HDMI^{®} is unavailable (No in S118), no output destination is determined to be set (S121), and information indicating that DMR is supported is concealed or the information is updated into one indicating that DMR is not supported (S122).

### EMBODIMENT 4

The following describes Embodiment 4.

Renderer device 100 according to Embodiment 4 may perform the process of updating network connection information according to Embodiments 1 through 3, every time an obtainment request for network connection information is received from controller device 200 in step S46 or step S46a.

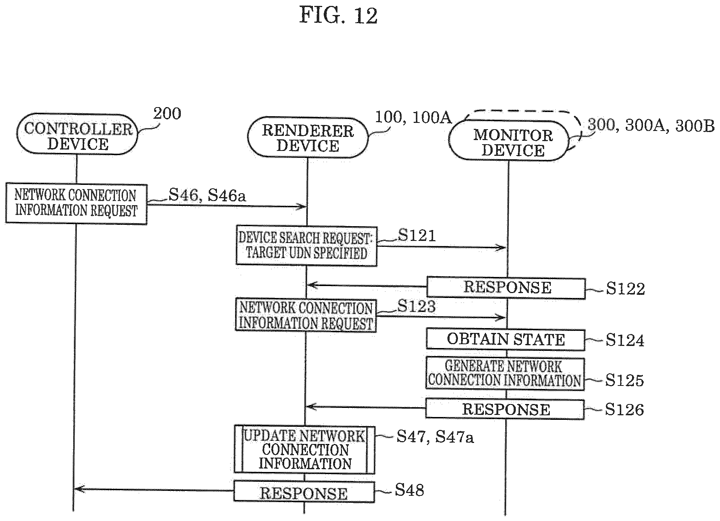

FIG. 12 is a sequence diagram showing an exemplary operation of content playback performed in the renderer playback system according to Embodiment 4. Note that FIG. 12 omits the steps before step S46 and the steps after step S48.

Embodiment 4 further performs step S121 through step S126 between steps S46 and S47 in Embodiment 1 or between steps S46a and S47a in Embodiment 2. The following describes an exemplary case where steps S121 through S126 are added to the operation performed in renderer playback system 1 according to Embodiment 1. Note that as for the description of the case where steps S121 through S126 are added to the operation performed in renderer playback system 1A according to Embodiment 2, step S46 is read as step S46a, step S47 as step S47a, renderer playback system 1 as renderer playback system 1A, renderer device 100 as renderer device 100A, monitor device 300 as monitor devices 300A and 300B, detector 120 as detector 120A, and communication unit 140 as communication unit 140A.

Subsequent to step S46, communication unit 140 of renderer device 100 sends to monitor device 300 a device search request, e.g., an M-SEARCH request that specifies the UDN of specified monitor device 300 as a search target (S121).

Communication unit 310 of monitor device 300 sends to renderer device 100 a response to the device search request, since the UDN specified by such request matches the UDN of the own device (S122).

When receiving the response from monitor device 300, communication unit 140 of renderer device 100 sends to such monitor device 300 an obtainment request for network connection information, e.g., an HTTPGET request (S123).

Monitor device 300 obtains the state of monitor device 300, i.e., the state of whether monitor device 300 is in the playback available state (S124), and generates network connection information that includes the obtained state (S125). Stated differently, monitor device 300 generates, as network connection information, information that includes the playback available state, the device name, the destination URL and so forth.

Communication unit 310 of monitor device 300 sends to renderer device 100 a response that includes the generated network connection information (S126).

Subsequently, renderer device 100 performs the process of updating the network connection information (S47), and sends to controller device 200 a response that includes the network connection information stored in memory unit 110 (S48).

Note that the process of updating network connection information in step S47 may be replaced by the information update process described in Embodiment 3.

### OTHER EMBODIMENTS

In the above-described embodiments, server device 400 stores content data, and monitor device 300 receives the content data from server device 400 for playback, but the content data may be stored by controller device 200, by renderer device 100, or by monitor device 300.

Also, monitor device 300 may send to renderer device 100 information in which information indicating a device-unique ID such as a UDN and an IP address are associated with each other, as network connection information used to connect to monitor device 300. In this case, when the IP address of monitor device 300 has been changed, monitor device 300 may associate the changed IP address with the information indicating the ID of monitor device 300 with each other to update the network connection information, and send the updated network connection information to renderer device 100. Renderer device 100 receives the updated network connection information, and updates the IP address included in the network connection information having the ID information common to that of the updated network connection information, thereby being able to store the latest IP address of monitor device 300 as network connection information. The IP address may be updated regularly, or may be updated at the request of network connection information, or when the IP address has been changed.

Also note that the communication protocols in the above-described embodiments are mere examples, and thus the present disclosure is not limited to them.

Also, the above-described embodiments request for network connection information in response to a device search request to obtain network connection information from each device, but the present disclosure is not limited to this, and thus may request for device information together with a device search request.

Note that in the above embodiments, the structural components may be implemented as dedicated hardware or may be achieved by executing a software program suited to such structural components. Alternatively, the structural components may be implemented by a program executor such as a CPU and a processor reading out and executing the software program recorded in a recording medium such as a hard disk or a semiconductor memory. Here, the software implemented as the renderer device, the renderer playback system, the information updating method and so forth according to each of the above embodiments is a program as described below.

Such program is an information updating method performed by a renderer device connected to a predetermined communication network. Such program causes a computer to execute: receiving a request from the controller device; sending to the controller device network connection information when the request has been received, the network connection information being stored in a memory unit included in the renderer device and used by the controller device to establish a connection to a device to be controlled by the controller device; detecting whether a monitor device is connected to the renderer device via the predetermined communication network: and updating the network connection information stored in the memory unit into network connection information used to connect to the monitor device, when the monitor device is detected in the detecting as being connected via the predetermined communication network.

Embodiments 1 through 3 have been described above to illustrate the technology disclosed in the present application. Note, however, that the technology according to the present disclosure is not limited to them, and thus is applicable to an embodiment obtained by making changes, replacements, additions, omissions and so forth, where appropriate. Also, structural components described in Embodiments 1 through 3 may be combined to provide a new embodiment.

The embodiments have been described above to illustrate the technology according to the present disclosure, for which the accompanying drawings and detailed description have been provided.

To illustrate the above technology, the structural components described in the accompanying drawings and detailed description can thus include not only the structural components essential to solve the issues, but also structural components unessential to solve the issues. Therefore, the fact that such unessential structural components are illustrated in the accompanying drawings and detailed description should not lead to the immediate conclusion that such unessential structural components are essential.

Also note that the above-described embodiments are intended to illustrate the technology according to the present disclosure, and thus allow for various modifications, replacements, additions, omissions, and so forth made thereto within the scope of the claims.

### INDUSTRIAL APPLICABILITY

The present disclosure is applicable for use as a renderer device, a renderer playback system, an information updating method and so forth capable of reducing communication load.

### REFERENCE MARKS IN THE DRAWINGS

- 1, 1A: renderer playback system
- 100, 100A: renderer device
- 110: memory unit
- 120, 120A: detector
- 130: information update unit
- 140, 140A: communication unit
- 150: output unit
- 200: controller device
- 210: input acceptor
- 220: display device
- 230: playback control unit
- 240: communication unit
- 300, 300A, 300B: monitor device
- 310: communication unit
- 320: playback control unit
- 330: display device
- 340: input acceptor
- 400: server device
- 410: content storage unit
- 420: communication unit
- 500: communication network
- 501: router

## Claims

1. A renderer device (100) to be controlled by a controller device (200) connected to a predetermined communication network (500), the renderer device (100) comprising:
a memory unit (110) that stores network connection information which indicates a connection destination of the controller device (200) and is used by the controller device (200) to establish a connection to a device to be controlled by the controller device (200);
a detector (120) that detects whether each of monitor devices (300) is connected to the renderer device (100) via the predetermined communication network (500);
an information update unit (130) that updates the connection destination indicated by the network connection information stored in the memory unit (110) so that the connection destination indicates one of the monitor devices (300), when the detector (120) has detected that the monitor device (300) is connected via the predetermined communication network (500); and
a communication unit (140) that sends the network connection information stored in the memory unit (110) to the controller device (200), when receiving a request from the controller device (200).

2. The renderer device (100) according to claim 1,
wherein the detector (120) performs communication that follows a specified procedure with each of the monitor devices (300) to detect that the monitor device has been connected to the renderer device (100).

3. The renderer device (100) according to claim 2,
wherein the detector (120) detects whether each of the monitor devices (300) connected through the communication that follows the specified procedure is in a playback available state, and
when receiving the request from the controller device (200), the communication unit (140):
(1) sends the network connection information on one of the monitor devices (300) stored in the memory unit (110) to the controller device (200) when the detector (120) has detected that the monitor device (300) is in the playback available state; and
(2) does not send the network connection information on any of the monitor devices (300) stored in the memory unit (110) to the controller device (200) when the detector (120) has detected that none of the monitor devices (300) is in the playback available state.

4. The renderer device (100) according to claim 1,
wherein the detector (120) detects a power state of each of the monitor devices (300) detected as being connected to the renderer device (100), and
when receiving the request from the controller device (200), the communication unit (140) sends to the controller device (200) the network connection information on one of the monitor devices (300), the power state of which detected by the detector (120) is a power-on state, out of items of the network connection information on the monitor devices (300).

5. The renderer device (100) according to any one of claims 1 to 4, further comprising:
an output unit (150) that outputs at least one of a video signal or an audio signal to a predetermined device by communication that is different from communication that uses the predetermined communication network (500),
wherein the communication unit (140) determines, as network connection information to send to the controller device (200), one of the network connection information on the monitor device (300) and the network connection information on the renderer device (100), based on a detection result obtained by the detector (120) and a state of the output unit (150), and sends the network connection information determined to the controller device (200).

6. A renderer playback system comprising:
the renderer device (100) according to any one of claims 1 to 5;
the controller device (200); and
a monitor device (300) that is connected to the predetermined communication network (500) and is unresponsive to a search request that specifies a renderer, when receiving the search request from the controller device (200).

7. A renderer playback system comprising:
the renderer device (100) according to any one of claims 1 to 5;
a monitor device (300) connected to the predetermined communication network; and
a controller device (200) that i) sends a search request specifying a renderer, and ii) determines a device to be controlled based on the network connection information received from the renderer device.

8. A renderer playback system comprising:
the renderer device (100) according to one of claims 3 and 4; and
a monitor device (300A, 300B) that is connected to the predetermined communication network, and sends state information to the renderer device via the predetermined communication network, the state information indicating that the monitor device (300A, 300B) is in a playback available state.

9. An information updating method performed by a renderer device (100) to be controlled by a controller device (200) connected to a predetermined communication network (500), the information updating method comprising:
receiving a request from the controller device (200);
wherein network connection information is stored in a memory unit (110) included in the renderer device (100), indicating a connection destination of the controller device, and is used by the controller device (200) to establish a connection to a device to be controlled by the controller device (200);
detecting whether a monitor device (300) is connected to the renderer device (100) via the predetermined communication network (500);
updating the connection destination indicated by the network connection information stored in the memory unit (110) so that the connection destination indicates the monitor device (300), when the monitor device (300) is detected in the detecting as being connected via the predetermined communication network (500); and sending to the controller device the updated network connection information.

## Patentansprüche

1. Rendervorrichtung (100), die von einer Steuervorrichtung (200) zu steuern ist, die mit einem vorbestimmten Kommunikationsnetzwerk (500) verbunden ist, wobei die Rendervorrichtung (100) Folgendes umfasst:
eine Speichereinheit (110), in der Netzwerkverbindungsinformationen gespeichert sind, die ein Verbindungsziel der Steuervorrichtung (200) anzeigen und von der Steuervorrichtung (200) verwendet werden, um eine Verbindung zu einer Vorrichtung aufzubauen, die von der Steuervorrichtung (200) zu steuern ist;
einen Detektor (120), der detektiert, ob jede von Überwachungsvorrichtungen (300) via das vorbestimmte Kommunikationsnetzwerk (500) mit der Rendervorrichtung (100) verbunden ist;
eine Informationsaktualisierungseinheit (130), die das Verbindungsziel, das von den in der Speichereinheit (110) gespeicherten Netzwerkverbindungsinformationen angezeigt wird, aktualisiert, derart, dass das Verbindungsziel eine der Überwachungsvorrichtungen (300) anzeigt, wenn der Detektor (120) detektiert hat, dass die Überwachungsvorrichtung (300) via das vorbestimmte Kommunikationsnetzwerk (500) verbunden ist; und
eine Kommunikationseinheit (140), die die in der Speichereinheit (110) gespeicherten Netzwerkverbindungsinformationen an die Steuervorrichtung (200) sendet, wenn sie von der Steuervorrichtung (200) eine Anforderung empfängt.

2. Rendervorrichtung (100) nach Anspruch 1,
wobei der Detektor (120) mit jeder der Überwachungsvorrichtungen (300) eine Kommunikation durchführt, die einer spezifizierten Prozedur folgt, um zu detektieren, dass die Überwachungsvorrichtung mit der Rendervorrichtung (100) verbunden wurde.

3. Rendervorrichtung (100) nach Anspruch 2,
wobei der Detektor (120) detektiert, ob sich jede der Überwachungsvorrichtungen (300), die über die Kommunikation, die der spezifizierten Prozedur folgt, verbunden sind, in einem Wiedergabeverfügbarkeitszustand befindet, und
die Kommunikationseinheit (140), wenn sie die Anforderung von der Steuervorrichtung (200) empfängt:
(1) sendet die Netzwerkverbindungsinformationen über eine der Überwachungsvorrichtungen (300), die in der Speichereinheit (110) gespeichert sind, an die Steuervorrichtung (200), wenn der Detektor (120) detektiert hat, dass sich die Überwachungsvorrichtung (300) im Wiedergabeverfügbarkeitszustand befindet; und
(2) sendet die Netzwerkverbindungsinformationen über eine der Überwachungsvorrichtungen (300), die in der Speichereinheit (110) gespeichert sind, nicht an die Steuervorrichtung (200), wenn der Detektor (120) detektiert hat, dass sich keine der Überwachungsvorrichtungen (300) im Wiedergabeverfügbarkeitszustand befindet.

4. Rendervorrichtung (100) nach Anspruch 1,
wobei der Detektor (120) einen Stromzustand von jeder der detektierten Überwachungsvorrichtungen (300) als mit der Rendervorrichtung (100) verbunden detektiert, und
wenn die Kommunikationseinheit (140) die Anforderung von der Steuervorrichtung (200) empfängt, sendet sie die Netzwerkverbindungsinformationen über eine der Überwachungsvorrichtungen (300), deren vom Detektor (120) detektierter Stromzustand ein eingeschalteter Zustand ist, von Elementen der Netzwerkverbindungsinformationen über die Überwachungsvorrichtungen (300) an die Steuervorrichtung (200).

5. Rendervorrichtung (100) nach einem der Ansprüche 1 bis 4, die ferner Folgendes umfasst:
eine Ausgabeeinheit (150), die mittels einer Kommunikation, die sich von der Kommunikation, die das vorbestimmte Kommunikationsnetzwerk (500) verwendet, unterscheidet, mindestens eines von einem Videosignal oder einem Audiosignal an eine vorbestimmte Vorrichtung ausgibt,
wobei die Kommunikationseinheit (140) eines der Netzwerkverbindungsinformationen über die Überwachungsvorrichtung (300) und der Netzwerkverbindungsinformationen über die Rendervorrichtung (100) auf Basis eines Detektionsergebnisses, das vom Detektor (120) erhalten wird, und eines Zustands der Ausgabeeinheit (150), als Netzwerkverbindungsinformationen bestimmt, die an die Steuervorrichtung (200) zu senden sind, und die bestimmten Netzwerkverbindungsinformationen an die Steuervorrichtung (200) sendet.

6. Rendererwiedergabesystem, das Folgendes umfasst:
die Rendervorrichtung (100) nach einem der Ansprüche 1 bis 5;
die Steuervorrichtung (200); und
eine Überwachungsvorrichtung (300), die mit dem vorbestimmten Kommunikationsnetzwerk (500) verbunden ist und auf eine Suchanforderung, die einen Renderer spezifiziert, nicht antwortet, wenn sie die Suchanforderung von der Steuervorrichtung (200) empfängt.

7. Rendererwiedergabesystem, das Folgendes umfasst:
die Rendervorrichtung (100) nach einem der Ansprüche 1 bis 5;
eine Überwachungsvorrichtung (300), die mit dem vorbestimmten Kommunikationsnetzwerk verbunden ist; und
eine Steuervorrichtung (200), die i) eine Suchanforderung, die einen Renderer spezifiziert, sendet und ii) auf Basis der Netzwerkverbindungsinformationen, die von der Rendervorrichtung empfangen werden, eine zu steuernde Vorrichtung bestimmt.

8. Rendererwiedergabesystem, das Folgendes umfasst:
die Rendervorrichtung (100) nach einem der Ansprüche 3 und 4; und
eine Überwachungsvorrichtung (300A, 300B), die mit dem vorbestimmten Kommunikationsnetzwerk verbunden ist und Zustandsinformationen via das vorbestimmte Kommunikationsnetzwerk an die Rendervorrichtung sendet, wobei die Zustandsinformationen anzeigen, dass sich die Überwachungsvorrichtung (300A, 300B) in einem Wiedergabeverfügbarkeitszustand befindet.

9. Informationsaktualisierungsverfahren, das von einer Rendervorrichtung (100) durchgeführt wird, die von einer Steuervorrichtung (200) zu steuern ist, die mit einem vorbestimmten Kommunikationsnetzwerk (500) verbunden ist, wobei das Informationsaktualisierungsverfahren Folgendes umfasst:
Empfangen einer Anforderung von der Steuervorrichtung (200);
wobei die Netzwerkverbindungsinformationen in einer Speichereinheit (110) gespeichert sind, die in der Rendervorrichtung (100) beinhaltet ist, und ein Verbindungsziel der Steuervorrichtung anzeigen und von der Steuervorrichtung (200) verwendet werden, um eine Verbindung zu einer Vorrichtung aufzubauen, die von der Steuervorrichtung (200) zu steuern ist;
Detektieren, ob eine Überwachungsvorrichtung (300) via das vorbestimmte Kommunikationsnetzwerk (500) mit der Rendervorrichtung (100) verbunden ist;
Aktualisieren des Verbindungsziels, das von den in der Speichereinheit (110) gespeicherten Netzwerkverbindungsinformationen angezeigt wird, derart, dass das Verbindungsziel die Überwachungsvorrichtung (300) anzeigt, wenn die Überwachungsvorrichtung (300) beim Detektieren als mit dem vorbestimmten Kommunikationsnetzwerk (500) verbunden detektiert wird; und
Senden der aktualisierten Netzwerkverbindungsinformationen an die Steuervorrichtung.

## Revendications

1. Dispositif de rendu (100) destiné à être commandé par un dispositif de commande (200) connecté à un réseau de communication prédéterminé (500), le dispositif de rendu (100) comprenant :
une unité de mémoire (110) qui stocke des informations de connexion au réseau qui indiquent une destination de connexion du dispositif de commande (200) et qui sont utilisées par le dispositif de commande (200) pour établir une connexion à un dispositif destiné à être commandé par le dispositif de commande (200) ;
un détecteur (120) qui détecte une éventuelle connexion de chacun de dispositifs de surveillance (300) au dispositif de rendu (100) via le réseau de communication prédéterminé (500) ;
une unité de mise à jour d'informations (130) qui met à jour la destination de connexion indiquée par les informations de connexion au réseau stockées dans l'unité de mémoire (110), de sorte que la destination de connexion indique l'un des dispositifs de surveillance (300), lorsque le détecteur (120) a détecté que le dispositif de surveillance (300) est connecté via le réseau de communication prédéterminé (500) ; et
une unité de communication (140) qui envoie au dispositif de commande (200) les informations de connexion au réseau stockées dans l'unité de mémoire (110), à la réception d'une demande du dispositif de commande (200).

2. Dispositif de rendu (100) selon la revendication 1, dans lequel le détecteur (120) réalise une communication qui suit une procédure spécifiée avec chacun des dispositifs de surveillance (300) pour détecter une connexion du dispositif de surveillance au dispositif de rendu (100).

3. Dispositif de rendu (100) selon la revendication 2,
dans lequel le détecteur (120) détecte un éventuel état de lecture disponible de chacun des dispositifs de surveillance (300) connectés par la communication qui suit la procédure spécifiée, et
à la réception de la demande du dispositif de commande (200), l'unité de communication (140) :
(1) envoie au dispositif de commande (200) les informations de connexion au réseau sur l'un des dispositifs de surveillance (300), stockées dans l'unité de mémoire (110), lorsque le détecteur (120) a détecté que le dispositif de surveillance (300) est dans l'état de lecture disponible ; et
(2) n'envoie pas au dispositif de commande (200) d'informations de connexion au réseau sur un quelconque dispositif de surveillance (300), stockées dans l'unité de mémoire (110), lorsque le détecteur (120) a détecté qu'aucun des dispositifs de surveillance (300) n'est dans l'état de lecture disponible.

4. Dispositif de rendu (100) selon la revendication 1,
dans lequel le détecteur (120) détecte un état d'alimentation de chacun des dispositifs de surveillance (300) détecté comme étant connecté au dispositif de rendu (100), et
à la réception de la demande du dispositif de commande (200), l'unité de communication (140) envoie au dispositif de commande (200) les informations de connexion au réseau sur l'un des dispositifs de surveillance (300) dont l'état d'alimentation détecté par le détecteur (120) est un état de mise sous tension, parmi les éléments des informations de connexion au réseau sur les dispositifs de surveillance (300).

5. Dispositif de rendu (100) selon l'une quelconque des revendications 1 à 4, comprenant en outre :
une unité de sortie (150) qui délivre au moins un parmi un signal vidéo ou un signal audio à un dispositif prédéterminé par une communication qui est différente de la communication qui utilise le réseau de communication prédéterminé (500),
dans lequel l'unité de communication (140) détermine, en tant qu'informations de connexion au réseau à envoyer au dispositif de commande (200), des informations parmi les informations de connexion au réseau sur le dispositif de surveillance (300) et les informations de connexion au réseau sur le dispositif de rendu (100), sur la base d'un résultat de détection obtenu par le détecteur (120) et d'un état de l'unité de sortie (150), et envoie au dispositif de commande (200) les informations de connexion au réseau déterminées.

6. Système de lecture de rendu comprenant :
le dispositif de rendu (100) selon l'une quelconque des revendications 1 à 5 ;
le dispositif de commande (200) ; et
un dispositif de surveillance (300) qui est connecté au réseau de communication prédéterminé (500) et qui ne répond pas à une demande de recherche qui spécifie un moteur de rendu, à la réception de la demande de recherche du dispositif de commande (200).

7. Système de lecture de rendu comprenant :
le dispositif de rendu (100) selon l'une quelconque des revendications 1 à 5 ;
un dispositif de surveillance (300) connecté au réseau de communication prédéterminé ; et
un dispositif de commande (200) qui i) envoie une demande de recherche spécifiant un moteur de rendu, et ii) détermine un dispositif destiné à être commandé sur la base des informations de connexion au réseau reçues du dispositif de rendu.

8. Système de lecture de rendu comprenant :
le dispositif de rendu (100) selon l'une des revendications 3 et 4 ; et
un dispositif de surveillance (300A, 300B) qui est connecté au réseau de communication prédéterminé et qui envoie des informations d'état au dispositif de rendu via le réseau de communication prédéterminé, les informations d'état indiquant que le dispositif de surveillance (300A, 300B) est dans un état de lecture disponible.

9. Procédé de mise à jour d'informations réalisé par un dispositif de rendu (100) destiné à être commandé par un dispositif de commande (200) connecté à un réseau de communication prédéterminé (500), le procédé de mise à jour d'informations comprenant les étapes consistant à :
recevoir une demande du dispositif de commande (200) ; dans lequel
les informations de connexion au réseau sont stockées dans une unité de mémoire (110) incluse dans le dispositif de rendu (100), indiquent une destination de connexion du dispositif de commande et sont utilisées par le dispositif de commande (200) pour établir une connexion à un dispositif destiné à être commandé par le dispositif de commande (200) ;
détecter une éventuelle connexion d'un dispositif de surveillance (300) au dispositif de rendu (100) via le réseau de communication prédéterminé (500) ;
mettre à jour la destination de connexion indiquée par les informations de connexion au réseau stockées dans l'unité de mémoire (110) de sorte que la destination de connexion indique le dispositif de surveillance (300), lorsque le dispositif de surveillance (300) est détecté au cours de la détection de sa connexion via le réseau de communication prédéterminé (500) ; et
envoyer au dispositif de commande les informations de connexion au réseau mises à jour.
